# EUROPEAN PATENT APPLICATION

(11) **EP 2 950 405 A1**
(43) Date of publication of application: **02.12.2015**
(21) Application number: 15169439.5
(22) Date of filing: 27.05.2015
(51) Int. Cl.: H01T 13/08, F16B 33/00, F16B 33/02, F16J 15/06

(54) **METALLIC COMPONENT, SPARK PLUG, AND SENSOR**

(30) Priority: 28.05.2014 JP 2014109987
(71) Applicant: NGK Spark Plug Co., Ltd., Nagoya-shi, Aichi 4678525 (JP)
(72) Inventor: Kawano, Hajime, Aichi, 4678525 (JP)
(74) Representative: Zimmermann & Partner Patentanwälte mbB

(57) **Abstract**

A metallic component (300) includes a trunk portion (320) extending from a forward end side toward a rear end side; a thread ridge (330) extending helically from the forward end side toward the rear end side on a side wall of the trunk portion (320), and a gasket (500) disposed rearward of the trunk portion. The rearmost thread ridge (330) is defined as a first thread ridge (332). A thread ridge one pitch forward of the first thread ridge (332) is defined as a second thread ridge (334), and a thread ridge having the highest height among thread ridges of the thread ridge (330) other than the first thread ridge (332) and the second thread ridge (334) is defined as a third thread ridge (336). Then the height of the first thread ridge (332) is 75% or more of the height of the third thread ridge (336), and the height of the second thread ridge (334) is 90% or more of the height of the third thread ridge (336).

## Description

### Technical Field

The present invention relates to a metallic component.

### Background Art

In an operation for mounting an ignition spark plug to an internal combustion engine such as a gasoline engine, a threaded portion formed on the outer surface of a metallic shell of the spark plug is screwed into a threaded hole provided in a cylinder head of the engine. In this case, sealing between the spark plug and the cylinder head is ensured by an annular gasket provided in the spark plug.

Generally, when a spark plug is mounted to a cylinder head, a gasket is attached to the spark plug in advance in such a manner that the gasket does not come off the spark plug. One method of preventing coming off of the gasket is providing the gasket with a small diameter portion whose inner diameter is smaller than the diameter of a thread ridge of the spark plug (see, for example, Patent Document 1).

### Prior Art Documents

Patent Document 1: Japanese Patent Application Laid-Open (*kokai*) No. 2013-125587
Patent Document 2: Japanese Patent Application Laid-Open (*kokai*) No. 2000-266186
Patent Document 3: Japanese Patent Application Laid-Open (*kokai*) No. 2010-27626

### Summary of the Invention

However, if the height of the thread ridge of the threaded portion is excessively high, the ease of movement of the gasket is reduced, so that the spark plug may fail to be smoothly mounted. If the height of the thread ridge is excessively low, there arise a possibility that the gasket comes off and a possibility that, even when the gasket is caught by the thread ridge, the gasket inclines, and the inclined gasket is mounted to the spark plug. In addition, during formation of the thread ridge of the spark plug, fiber-like metal pieces may be generated.
These metal pieces may bite into the upper or lower surfaces of the gasket. In this case, sealing between the spark plug and the cylinder head may fail to be ensured. These problems are not peculiar to spark plugs but are common among spark plugs and sensors.

To solve, at least partially, the above problems, the present invention can be embodied in the following modes.
(1) One mode of the present invention is a metallic component. The metallic component comprises a trunk portion extending from a forward end side toward a rear end side; a thread ridge (screw thread) extending helically on a side wall of the trunk portion from the forward end side toward the rear end side; and a gasket disposed rearward of the trunk portion, wherein - for example in a cross-sectional view from the rear end side to the forward end side - a rearmost thread ridge is defined as a first thread ridge, a thread ridge located one pitch forward of the first thread ridge is defined as a second thread ridge, a thread ridge having a highest height among thread ridges of the thread ridge other than the first thread ridge and the second thread ridge is defined as a third thread ridge, the height of the first thread ridge is 75% or more of the height of the third thread ridge, and the height of the second thread ridge is 90% or more of the height of the third thread ridge. According to the metallic component of this mode, inclination of the gasket during mounting of the metallic component can be restrained. The thread ridge or screw thread, which extends helically on the side wall of the trunk portion from the forward end side toward the rear end side, can be regarded to form a plurality of ridges when seen in a cross-sectional view from the rear end side to the forward end side.
(2) In the metallic component of the above-described mode, the height of the first thread ridge may be 94% or less of the height of the third thread ridge. In the metallic component of this mode, since the height of the first thread ridge is lower than when the height of the first thread ridge is 100% of the height of the third thread ridge, the ease of movement of the gasket is high. Therefore, the gasket can preferably rotate during mounting of the metallic component, so that the mounting operation can be smoothly performed.
(3) In the metallic component of the above-described mode, the height of the first thread ridge may be 85% or more of the height of the third thread ridge. According to the metallic component of this mode, the inclination of the gasket during mounting of the metallic component can be further restrained.
(4) In the metallic component of the above-described mode, the height of the first thread ridge may be 85% or more and 87% or less of the height of the third thread ridge. According to the metallic component of this mode, generation of fiber-like metal pieces when the thread ridge is produced can be suppressed.
(5) Another mode of the present invention is a spark plug. The spark plug comprises the metallic component of the above-described mode. According to the spark plug of this mode, the inclination of the gasket during mounting of the spark plug can be restrained.
(6) Another mode of the present invention is a sensor. The sensor comprises the metallic component of the above-described mode. According to the sensor of this mode, the inclination of the gasket during mounting of the sensor can be restrained.
The present invention can be embodied in various modes. For example, the present invention can be embodied in different modes such as a method of producing the metallic component and an ignition system to which the metallic component is mounted.

### Brief Description of the Drawings

FIG. 1 shows an explanatory view showing a spark plug 10 in a partially sectioned state.
FIG. 2 shows a schematic view illustrating a thread ridge 330.
FIG. 3 shows a table showing the results of evaluation of the relations among heights of thread ridges, inclination of a gasket 500, etc. in prototypes.
FIG. 4 shows images showing a conventional product (Comparative Example) and a prototype (Example of the present invention).

### Modes for Currying out the Invention

### A. Embodiment

### A-1. Configuration of spark plug

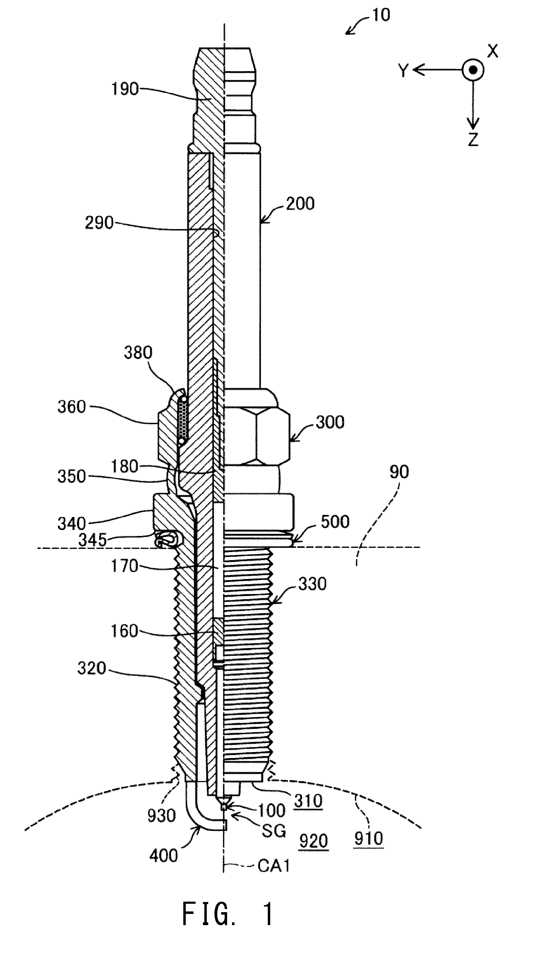

FIG. 1 is an explanatory view showing a spark plug 10 in a partially sectioned state. In FIG. 1, the exterior shape of the spark plug 10 is shown on the right side of the sheet with respect to an axial line CA1, i.e., the axis of the spark plug 10, and a cross-sectional shape of the spark plug 10 is shown on the left side of the sheet. In this figure, a center electrode 100 and a ground electrode 400 are shown not in cross section but in exterior shape, in order to facilitate understanding of the present technique. In the description of the present embodiment, the lower side in the sheet of FIG. 1 is referred to as a "forward end side" of the spark plug 10, and the upper side in the sheet of FIG. 1 is referred to as a "rear end side." A "metallic shell 300" in the present embodiment corresponds to the "metallic component" in "Means for Solving the Problems."

The spark plug 10 includes the center electrode 100, an insulator 200, the metallic shell 300, and the ground electrode 400. In the present embodiment, the axial line CA1 of the spark plug 10 is also the axis of the center electrode 100, the axis of the insulator 200, and the axis of the metallic shell 300.

The spark plug 10 has at its forward end a gap SG formed between the center electrode 100 and the ground electrode 400. The gap SG of the spark plug 10 is referred to also as a spark gap. The spark plug 10 is configured so as to be mountable to an internal combustion engine 90 with the forward end at which the gap SG is formed protruding from an inner wall 910 of a combustion chamber 920. When a high voltage of, for example, 20,000 to 30,000 V is applied to the center electrode 100 of the spark plug 10 mounted to the internal combustion engine 90, spark discharge is generated in the gap SG. The spark discharge generated in the gap SG causes ignition of an air-fuel mixture in the combustion chamber 920.

XYZ axes orthogonal to each other are shown in FIG. 1. The XYZ axes shown in FIG. 1 correspond to XYZ axes in other figures described later.

Among the XYZ axes in FIG. 1, the Z axis is an axis along the axial line CA1. Z axis directions (axial directions) along the Z axis include a +Z axis direction directed from the rear end side of the spark plug 10 toward the forward end side and a -Z axis direction opposite the +Z axis direction. The +Z axis direction is a direction in which the center electrode 100 together with the insulator 200 protrudes from the forward end of the metallic shell 300 along the axial line CA1.

Among the XYZ axes in FIG. 1, the Y axis is an axis in a direction in which the ground electrode 400 is bent toward the axial line CA1. Y axis directions along the Y axis include a -Y axis direction in which the ground electrode 400 is bent toward the axial line CA1 and a +Y axis direction opposite the -Y axis direction.

Among the XYZ axes in FIG. 1, the X axis is an axis orthogonal to the Y axis and the Z axis. X axis directions along the X axis include a +X axis direction directed frontward from the sheet of FIG. 1 and a -X axis direction opposite the +X axis direction.

The center electrode 100 of the spark plug 10 is an electrically conductive member. The center electrode 100 is a rod-like electrode extending with its center coinciding with the axial line CA1. In the present embodiment, the center electrode 100 is formed of a nickel alloy containing nickel (Ni) as a main component (for example, Inconel (registered trademark) 600). The outer surface of the center electrode 100 is electrically insulated from the outside by the insulator 200. The forward end of the center electrode 100 protrudes from the forward end of the insulator 200. The rear end of the center electrode 100 is electrically connected to a metal terminal 190 at the rear end of the insulator 200. In the present embodiment, the rear end of the center electrode 100 is electrically connected to the metal terminal 190 at the rear end of the insulator 200 through a seal 160, a ceramic resistor 170, and a seal 180.

The ground electrode 400 of the spark plug 10 is an electrically conductive member. The ground electrode 400 has a shape including a section extending parallel to the axial line CA1 from the metallic shell 300 and a section bent toward the axial line CA1. The base end portion of the ground electrode 400 is welded to the metallic shell 300. The distal end of the ground electrode 400 and the center electrode 100 form the gap SG therebetween. In the present embodiment, the ground electrode 400 is formed of a nickel alloy containing nickel (Ni) as a main component (for example, Inconel (registered trademark) 600 or 601).

The insulator 200 of the spark plug 10 is an electrically insulating insulator. The insulator 200 is a tubular insulator extending with its center coinciding with the axial line CA1. In the present embodiment, the insulator 200 is produced by firing an insulating ceramic material (for example, alumina).

The insulator 200 has an axial hole 290 that is a through hole extending with its center coinciding with the axial line CA1. The center electrode 100 is held on the axial line CA1 within the axial hole 290 of the insulator 200 with the forward end of the center electrode 100 protruding from the forward end (the end on the +Z axis direction side) of the insulator 200.

The metallic shell 300 of the spark plug 10 is an electrically conductive metallic component. The metallic shell 300 is a tubular member extending with its center coinciding with the axial line CA1. In the present embodiment, the tubular metallic shell 300 is formed of low-carbon steel and plated with nickel. In other embodiments, the metallic shell 300 may be a Zn-plated member, a non-plated (plating less) member, or a Zn-plated member further subjected to chromate treatment.

The metallic shell 300 is fixed to the outer surface of the insulator 200 by crimping and is electrically insulated from the center electrode 100. The metallic shell 300 includes a trunk portion 320 extending from the forward end side toward the rear end side, a thread ridge 330 extending on the side wall of the trunk portion 320 helically from the forward end side toward the rear end side, and a gasket 500 disposed rearward of the trunk portion 320. The metallic shell 300 further includes an end surface 310, a flange portion 340, a groove portion 350, a tool engagement portion 360, and a crimped lid 380.

The end surface 310 of the metallic shell 300 forms the front end (the end on the +Z axis direction side) of the metallic shell 300. In the present embodiment, the end surface 310 is a flat surface extending along the X and Y axes and oriented in the +Z axis direction. In the present embodiment, the end surface 310 is a circular flat surface with a hole. The ground electrode 400 is welded to the end surface 310. The insulator 200 together with the center electrode 100 protrudes from the center of the end surface 310 in the +Z axis direction.

The flange portion 340 of the metallic shell 300 bulges radially outward further than the groove portion 350. When the spark plug 10 is mounted to the internal combustion engine 90, the gasket 500 is compressed between the flange portion 340 and the internal combustion engine 90. A surface forming the forward end (the end on the +Z axis direction side) of the flange portion 340 is referred to as an end surface 345. The end surface 345 is in contact with the gasket 500.

The gasket 500 is an annular member formed of stainless steel or low-carbon steel. The gasket 500 is provided in order to ensure airtightness when the spark plug 10 is mounted to the internal combustion engine.

The groove portion 350 of the metallic shell 300 is a cylindrical portion that is bulged radially outward when the metallic shell 300 is fixed to the insulator 200 by crimping. The groove portion 350 is located between the flange portion 340 and the tool engagement portion 360.

The tool engagement portion 360 of the metallic shell 300 is a polygonal flange-like portion protruding radially outward further than the groove portion 350. The tool engagement portion 360 has a shape that allows engagement therewith of a tool (not shown) used to mount the spark plug 10 to the internal combustion engine 90. In the present embodiment, the tool engagement portion 360 has a hexagonal outer shape.

The crimped lid 380 of the metallic shell 300 is a portion formed by bending the rear end of the metallic shell 300 toward the insulator 200. The crimped lid 380 is formed when the metallic shell 300 is fixed to the insulator 200 by crimping.

The trunk portion 320 of the metallic shell 300 is a cylindrical portion having a thread ridge formed on its outer surface. In the present embodiment, the thread ridge 330 of the trunk portion 320 is screwed into a threaded hole 930 of the internal combustion engine 90, whereby the spark plug 10 can be mounted to the internal combustion engine 90. In the present embodiment, the nominal diameter of the trunk portion 320 is M10. In other embodiments, the nominal diameter of the trunk portion 320 may be smaller than M10 (may be, for example, M8) or larger than M10 (may be, for example, M12, M14, or M18). The thread ridge 330 is formed by rolling. The height of the thread ridge can be controlled by adjusting the load and time during rolling, the hardness of the material of the metallic shell 300, etc.

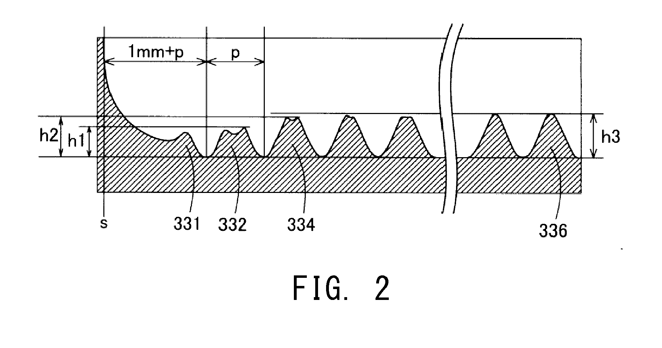

FIG. 2 is a schematic diagram showing the thread ridge 330. The left side in the sheet is the side toward the tool engagement portion 360 (the rear end side), and the right side in the sheet is the side toward the end surface 310 (the forward end side). The rearmost thread ridge is referred to as a first thread ridge 332, and a thread ridge one pitch p forward of the first thread ridge 332 is referred to as a second thread ridge 334. For convenience, a protruding portion rearward of the first thread portion is referred to as a "zeroth thread ridge 331". The thread pitch is the distance between adjacent thread ridges. In the present embodiment, since the nominal diameter of the trunk portion 320 is M10, one thread pitch p is 1 mm. When the nominal diameter is M8, one thread pitch p is 1 mm. When the nominal diameter is M12 or M14, one thread pitch p is 1.25 mm. When the nominal diameter is M18, one thread pitch p is 1.5 mm. The "zeroth thread ridge 331" is not regarded as a complete ridge as it is not delimited by two completely formed roots as the other ridges. Therefore, the first ridge 332 is regarded as the rearmost thread ridge.

The height of a thread ridge is defined as the distance between the root of the thread ridge and the crest of the thread ridge in a direction orthogonal to the axial line CA1. In other words, the height of a thread ridge is one half of a value obtained by subtracting the minor diameter (root diameter) of the thread from the major diameter of the thread (ridge). The minor diameter of the thread is constant.

The height of a thread ridge is evaluated (or measured) in a cross section at a phase where a root of the thread is located at a position one pitch p + 1 mm from a length dimension reference position s, i.e., the end surface 345 (see FIG. 1) of the flange portion 340. In FIG. 2, the height of the first thread ridge 332 is h1, and the height of the second thread ridge 334 is h2.

In the thread ridge 330, a thread ridge having the highest height among the thread ridges other than the first thread ridge 332 and the second thread ridge 334 is referred to as a third thread ridge 336. As shown in FIG. 2, the crest of the third thread ridge 336 does not have irregularities, and has a single vertex. The height of the third thread ridge 336 is h3.

The present inventors have found that when the height h1 of the first thread ridge 332 is 75% or more of the height h3 of the third thread ridge 336 and the height h2 of the second thread ridge 334 is 90% or more of the height h3 of the third thread ridge 336, inclination of the gasket 500 when the metallic shell 300 is screwed into the threaded hole 930 of the internal combustion engine 90 can be restrained. Specifically, as described above, the height h1 of the first thread ridge 332 is 75% or more of the height h3 of the third thread ridge 336, and the height h2 of the second thread ridge 334 is 90% or more of the height h3 of the third thread ridge 336. Therefore, when the gasket 500 in a non-inclined state and present between the end surface 345 of the flange portion 340 and the second thread ridge 334 starts inclining, the presence of the first thread ridge 332 and the second thread ridge 334 can restrict the inclination of the gasket 500, so that the gasket 500 is prevented from inclining forward beyond the second thread ridge 334.

The present inventors have also found the following. When the height h1 of the first thread ridge 332 is 94% or less of the height h3 of the third thread ridge 336, the height h1 of the first thread ridge 332 is lower than when the height h1 of the first thread ridge 332 is 100% of the height h3 of the third thread ridge 336, and therefore the ease of movement of the gasket 500 becomes high. In the metal forming the metallic shell 300, a portion - which, before rolling, is present between a portion that is to become the zeroth thread ridge 331 as a result of the rolling and a portion that is to become the first thread ridge 332 as a result of the rolling - moves and forms the zeroth thread ridge 331 and the first thread ridge 332 during the rolling. The first thread ridge 332 is formed to have a proper height.
In other words, in the metal forming the metallic shell 300, the amount of metal of the above-mentioned portion - which, before the rolling, is present between the portion that is to become the zeroth thread ridge 331 as a result of the rolling and the portion that is to become the first thread ridge 332 as a result of the rolling - is adequately small so that the first thread ridge 332 formed has a proper height. Therefore, the zeroth thread ridge 331 is also formed to have a proper height. Specifically, since the height h1 of the first thread ridge 332 is a proper value, the thickness (the width in the sheet of FIG. 2) of the zeroth thread ridge 331 does not become too large, and the gasket can move properly, so that the ease of movement of the gasket 500 becomes high. Therefore, when the metallic shell 300 is screwed into the threaded hole 930 of the internal combustion engine 90, the gasket 500 can rotate preferably, and the mounting operation can be performed smoothly.

The present inventors have also found that, when the height h1 of the first thread ridge 332 is 85% or more of the height h3 of the third thread ridge 336, the inclination of the gasket 500 when the metallic shell 300 is screwed into the threaded hole 930 of the internal combustion engine 90 can be further restrained.

The present inventors have also found that, when the height h1 of the first thread ridge 332 is 85% or more and 87% or less of the height h3 of the third thread ridge 336, the generation of fiber-like metal pieces at the time of production of the thread ridge can be suppressed. The mechanism of the generation of the fiber-like metal pieces may be as follows. During rolling, a force acts on a portion between the portion that is to become the zeroth thread ridge 331 and the portion that is to become the first thread ridge 332, and the zeroth thread ridge 331 and the first thread ridge 332 are thereby formed. In this case, if the force is not uniform, fiber-like metal pieces are generated. However, when the height h1 of the first thread ridge 332 is controlled to 85% or more and 87% or less of the height h3 of the third thread ridge 336, the non-uniformity of the force during the rolling is restrained, and this may suppress the generation of the fiber-like metal pieces. Therefore, deterioration of airtightness after the metallic shell 300 is screwed into the threaded hole 930 of the internal combustion engine 90 can be suppressed.

### A-2. Evaluation of metallic shell 300

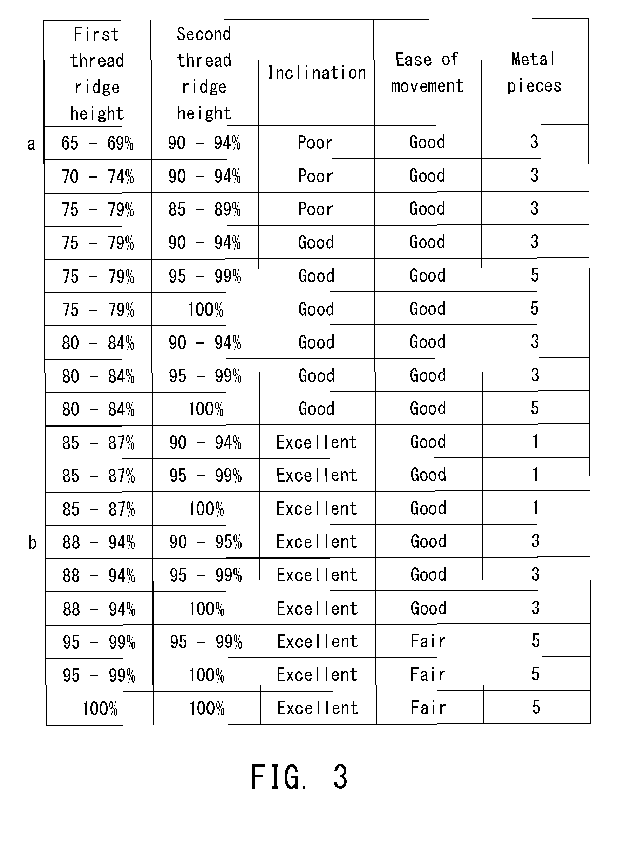

FIG. 3 is a table showing the results of evaluation of the relations among heights of thread ridges in each prototype, inclination of the gasket 500, etc. Specifically, FIG. 3 shows the relations among (i) the height h1 of the first thread ridge 332 (denoted as "first thread ridge height"), (ii) the height h2 of the second thread ridge 334 (denoted as "second thread ridge height"), (iii) the inclination (denoted as "inclination") of the gasket 500 when it is attached to the metallic shell 300, (iv) the ease of movement of the gasket 500 (denoted as "ease of movement"), and (v) the generation of metal pieces (denoted as "metal pieces"). In the results shown, the height h1 of each first thread ridge 332 is classified into one of height classes, and the height h2 of each second thread ridge 334 is classified into one of height classes.

The inclination of the gasket 500 after it was attached to the metallic shell 300 was evaluated as follows. When the gasket 500 attached to the metallic shell 300 inclined and a portion of the gasket 500 reached the second thread ridge 334, the inclination of the gasket 500 was evaluated as "poor." When the gasket 500 attached to the metallic shell 300 inclined and a portion of the gasket 500 reached the first thread ridge 332, the inclination of the gasket 500 was evaluated as "good." When the gasket 500 did not incline, the inclination of the gasket 500 was evaluated as "excellent." When the gasket 500 inclines and a portion of the gasket 500 reaches the first thread ridge 332 or the second thread ridge 334, the airtightness after the metallic shell 300 is mounted may deteriorate. It is therefore preferable that the gasket 500 have no inclination.

The ease of movement of the gasket 500 during mounting of the metallic shell 300 was evaluated as follows. Ten metallic shells 300 were used for the evaluation. Each of the metallic shells 300 was screwed into a threaded hole 930 of an internal combustion engine 90. When variations in torque occurred in all the ten metallic shells, the ease of movement was evaluated as "poor." When variations in torque occurred in one to nine out of the ten metallic shells, the ease of movement was evaluated as "fair." When no variations in torque occurred in all the ten metallic shells, the ease of movement was evaluated as "good." No variations in torque mean that the gasket 500 can rotate preferably and the mounting operation can be performed smoothly.

The metal pieces mean fiber-like metal pieces generated when the thread ridge is produced. Each value in the column of generation of metal pieces represents the length (mm) of the metal pieces. The number of tests was 1. The smaller the value, the further the generation of metal pieces is suppressed. Therefore, a reduction in airtightness after the metallic shell 300 is screwed into the threaded hole 930 of the internal combustion engine 90 can be suppressed.

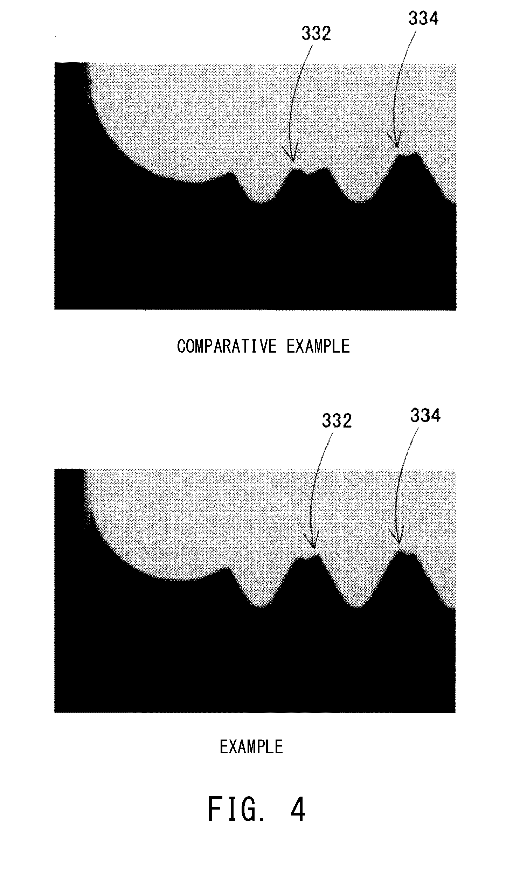

FIG. 4 is a set of images showing a conventional product (a Comparative Example) and a prototype (an Example of the present invention). The image of the Comparative Example shows the results "a" at the top of FIG. 3, and the image of the Example shows the results "b" in the sixth row from the bottom of FIG. 3. As shown in each diagram in FIG. 4, the height h1 of the first thread ridge 332 differs from the height h2 of the second thread ridge 334.

The results shown in FIG. 3 reveal the following. The higher the height h1 of the first thread ridge 332, the smaller the inclination of the gasket 500. The lower the height h1 of the first thread ridge 332, the higher the ease of movement of the gasket 500. The generation of metal pieces can be suppressed when the height h1 of the first thread ridge 332 is 85% or more and 87% or less of the height h3 of the third thread ridge 336.

### B. Other embodiments

The present invention is not limited to the above described embodiment, examples, and modifications and may be embodied in various other forms without departing from the invention. For example, the technical features in the embodiment, examples, and variations corresponding to the technical features in the modes described in Summary of the Invention can be appropriately replaced or combined to solve some of or all the foregoing problems or to achieve some of or all the foregoing effects. A technical feature which is not described as an essential feature in the present specification is optional and may be appropriately deleted.

In the above embodiment, the metallic component is the metallic shell 300. However, the metallic component of the present invention is not limited to the metallic shell 300. The metallic component may be, for example, a metallic shell of a sensor, a screw, or a bolt. A metallic shell of a sensor is disclosed in Japanese Patent Application Laid-Open (*kokai*) No. 2014-52254. The trunk portion of the metallic component may be a hollow cylindrical member with a central cavity, as in the metallic shell 300, or may be a solid cylindrical member with no central cavity.

### Description of Reference Numerals

- 10:: spark plug
- 90:: internal combustion engine
- 100:: center electrode
- 160:: seal
- 170:: ceramic resistor
- 180:: seal
- 190:: metal terminal
- 200:: insulator
- 290:: axial hole
- 300:: metallic shell
- 310:: end surface
- 320:: trunk portion
- 330:: thread
- 331:: zeroth thread ridge
- 332:: first thread ridge
- 334:: second thread ridge
- 336:: third thread ridge
- 340:: flange portion
- 345:: end surface
- 350:: groove portion
- 360:: tool engagement portion
- 380:: crimped lid
- 400:: ground electrode
- 500:: gasket
- 910:: inner wall
- 920:: combustion chamber
- 930:: hole
- p:: thread pitch
- s:: length dimension reference position
- a:: result
- b:: result
- SG:: gap
- CA1:: axial line

## Claims

1. A metallic component (300) comprising:
a trunk portion (320) extending from a forward end side toward a rear end side;
a thread ridge (330) extending helically on a side wall of the trunk portion (320) from the forward end side toward the rear end side; and
a gasket (500) disposed rearward of the trunk portion (320),
wherein a rearmost thread ridge (330) is defined as a first thread ridge (332),
a thread ridge located one pitch forward of the first thread ridge (332) is defined as a second thread ridge (334),
a thread ridge having a highest height among thread ridges of the thread ridge (330) other than the first thread ridge (332) and the second thread ridge (334) is defined as a third thread ridge (336),
the height of the first thread ridge (332) is 75% or more of the height of the third thread ridge (336), and
the height of the second thread ridge (334) is 90% or more of the height of the third thread ridge (336).

2. A metallic component (300) according to claim 1, wherein
the height of the first thread ridge (332) is 94% or less of the height of the third thread ridge (336).

3. A metallic component (300) according to claim 1 or 2, wherein
the height of the first thread ridge (332) is 85% or more of the height of the third thread ridge (336).

4. A metallic component (300) according to any one of claims 1 to 3, wherein
the height of the first thread ridge (332) is 85% or more and 87% or less of the height of the third thread ridge (336).

5. A spark plug comprising a metallic component (300) according to any one of claims 1 to 4.

6. A sensor comprising a metallic component (300) according to any one of claims 1 to 4.
